(19) Europäisches Patentamt
European Patent Office
Office européen des brevets

(11) EP 2 728 175 A1

(12) EUROPEAN PATENT APPLICATION
published in accordance with Art. 153(4) EPC

(43) Date of publication:
07.05.2014 Bulletin 2014/19

(51) Int Cl.:
*F03D 7/04* (2006.01)

(21) Application number: 12803930.2

(22) Date of filing: 27.06.2012

(86) International application number:
PCT/JP2012/066374

(87) International publication number:
WO 2013/002256 (03.01.2013 Gazette 2013/01)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR

(30) Priority: 28.06.2011 JP 2011143332

(71) Applicant: Mitsubishi Heavy Industries, Ltd.
Tokyo 108-8215 (JP)

(72) Inventors:
• NAKAMURA, Shigeaki
Tokyo 108-8215 (JP)

• DAIGO, Katsuya
Tokyo 108-8215 (JP)
• BABA, Mitsuya
Tokyo 108-8215 (JP)

(74) Representative: Intès, Didier Gérard André et al
Cabinet Beau de Loménie
158, rue de l'Université
75340 Paris Cedex 07 (FR)

(54) **OPERATION MONITORING SYSTEM, OPERATION MONITORING METHOD, AND PROGRAM**

(57) In connection with a wind power generator, it is desirable to safely operate a wind turbine without stopping even when a failure occurs in a measurement sensor such as an aerovane, while a power generation loss is avoided before the completion of the replacement or repair. A remote monitoring system includes a plurality of wind power generators located in the same site, each measuring a status of a peripheral environment by a measurement sensor; and a remote monitoring unit collecting data related to the peripheral environment of each wind power generator. When detecting a occurrence of a trouble in the measurement sensor of at least one wind power generator out of said plurality of wind power generators, the remote monitoring unit transmits data related to the peripheral environment measured by the measurement sensor of a different wind power generator other than the wind turbine generator for which the trouble occurs in said measurement sensor out of the plurality of wind turbine generators, to the wind turbine generator for which the trouble occurs in the measurement sensor. The wind power generator for which the trouble occurs in the measurement sensor continues to operate by using the data related to the peripheral environment which are transmitted from the remote monitoring unit.

Fig. 1

EP 2 728 175 A1

## Description

### Technical Field

The present invention relates to an operation monitoring system, more particularly, to an operation monitoring system of wind power generators.

### Background Art

Each wind power generator is provided with one or two peripheral environment measurement sensors, such as aerovanes. If failures occur in all of the measurement sensors provided for a single wind turbine, it is made impossible to rotate the wind receiving face of the wind turbine in accordance with the wind direction (for an upwind wind turbine, toward the upwind direction), because of the impossibility of measuring the wind direction and speed. This may result in that an unexpected load is applied to the wind turbine.

The same goes for the case when the peripheral environment measurement sensors, such as aerovanes, cannot send a failure signal (a signal notifying a trouble) for some reason, regardless of whether or not a failure occurs in the measurement sensors; it is made impossible to rotate the wind receiving face of the wind turbine in accordance with the wind direction, and this may result in that an unexpected load is applied to the wind turbine.

Furthermore, when a failure occurs in a peripheral environment measurement sensor other than an aerovane, such as outside air temperature gauge, it is made impossible to monitor the abnormality of the inside temperature in the wind turbine main unit (or the nacelle) on the basis of the difference between the outside air temperature and the inside temperature in the wind turbine main unit (or in a machine room of the nacelle). This may result in that it is made necessary to stop the operation of the wind turbine or in that a failure (or an abnormal stop) occurs due to the inside temperature abnormality.

Accordingly, when a failure occurs in a measurement sensor, it is necessary to immediately replace or repair the measurement sensor (or perform maintenance). When measurement sensors are replaced or repaired, however, this requires stopping the wind turbine until the replacement or repair of all the measurement sensors is completed. The relevant wind power generator cannot generate electric power until the replacement or repair of all the measurement sensors is completed after the wind turbine is stopped, and this is one factor of the reduction in the revenue from sales of electric power.

As a related art, patent literature 1 (U.S. Patent Application Publication No. 2002/0029097 A1) discloses a wind farm control system. In this related art, a SCADA (supervisory control and data acquisition) system is established to perform an operation control of wind power generators by mutually using remote monitoring data of neighboring wind turbines.

### Citation List

Patent Literature

Patent literature 1: U.S. Patent Application Publication No. 2002/0029097 A1

### Summary of Invention

An objective of the present invention is to provide an operation monitoring system which, when a failure occurs in a measurement sensor of a certain wind turbine, uses a measurement result (or observation data) of a measurement sensor of a wind turbine located around or near the certain wind turbine (located in the same site).

In an aspect of the present invention, an operation monitoring system includes: a plurality of wind power generators located in the same site, each measuring a status of a peripheral environment by a measurement sensor; and a remote monitoring unit monitoring each of said plurality of wind power generators to collect data related to the peripheral environment of each wind power generator. When detecting an occurrence of a trouble in the measurement sensor of at least one wind power generator out of said plurality of wind power generators, said remote monitoring unit transmits data related to the peripheral environment measured by the measurement sensor of a different wind power generator other than the wind turbine generator for which the trouble occurs in said measurement sensor out of said plurality of wind turbine generators, to the wind turbine generator for which the trouble occurs in said measurement sensor. The wind power generator for which the trouble occurs in said measurement sensor continues to operate by using the data related to the peripheral environment which are transmitted from said remote monitoring unit.

In another aspect of the present invention, a remote monitoring unit includes: means for collecting, from a plurality of wind power generators located in the same site, data measured by a measurement sensor for measuring data related to a peripheral environment of each of the wind power generators; means for detecting an occurrence of a trouble of a measurement sensor of at least one wind power generator out of said plurality of wind power generators; and means for transmitting data related to the peripheral environment measured by the measurement sensor of a different wind power generator other than the wind turbine generator for which the trouble occurs in said measurement sensor out of said plurality of wind turbine generators, to the wind turbine generator for which the trouble occurs in said measurement sensor.

In still another aspect of the present invention, a wind power generator includes: means for measuring a status of a peripheral environment by using a measurement sensor provided; means for, when a trouble occurs in said measurement sensor, obtaining data related to a peripheral environment measured by a measurement sensor of a different wind power generator from a remote monitoring unit which monitors each of a plurality of wind power generators located in a same site as the wind power generator to collect data related to a peripheral environment of each of said plurality of wind power generators; and means for continuing an operation by using the data related to the peripheral environment obtained from said remote monitoring unit.

In still another aspect of the present invention, an operation monitoring method includes: a step of, by a measurement sensor mounted on each of a plurality of wind turbine generators located in a same site, measuring a status of a peripheral environment of each of said plurality of wind turbine generators; a step of, by a remote monitoring unit, monitoring each of said plurality of wind power generators to collect data related to the peripheral environment of each of said plurality of wind power generator; a step of, when said remote monitoring unit detects a occurrence of a trouble in the measurement sensor of at least one wind power generator out of said plurality of wind power generators, transmitting data related to the peripheral environment measured by the measurement sensor of a different wind power generator other than the wind turbine generator for which the trouble occurs in said measurement sensor out of said plurality of wind turbine generators, to the wind turbine generator for which the trouble occurs in said measurement sensor; and a step of continuing an operate of the wind power generator for which the trouble occurs in said measurement sensor by using the data related to the peripheral environment which are transmitted from said remote monitoring unit.

In still another aspect of the present invention, a program causes a remote monitoring unit to perform steps of: collecting, from a plurality of wind power generators located in a same site, data measured by a measurement sensor for measuring data related to a peripheral environment of each of the wind power generators; and when a occurrence of a trouble is detected in the measurement sensor of at least one wind power generator out of said plurality of wind power generators, transmitting data related to a peripheral environment measured by a measurement sensor of a different wind power generator other than the wind turbine generator for which the trouble occurs in said measurement sensor out of said plurality of wind turbine generators, to the wind turbine generator for which the trouble occurs in said measurement sensor.

When a failure occurs in a peripheral environment measurement sensor, it is possible to safely operate a wind turbine without stopping, avoiding a loss of opportunity of power generation or generated power, before the completion of the replacement or repair.

## Brief Description of Drawings

The above-described objective, other objectives, advantageous effects and features of the present invention will be clarified from the description of embodiments in combination with the attached drawings in which:

Fig. 1 is a diagram illustrating a configuration example of an operation monitoring system according to the present invention;
Fig. 2 is a diagram for explaining details of the configuration example of the operation monitoring system according to the present invention;
Fig. 3 is a diagram for explaining details of configuration examples of a remote monitoring apparatus and a management terminal according to the present invention;
Fig. 4 is a diagram for explaining an implementation example of the operation monitoring system according to the present invention; and
Fig. 5 is a flowchart for explaining the procedure of the process in the implementation example of the operation monitoring system according to the present invention.

## Description of Embodiments

<Embodiments>

In the following, a description is given of embodiments of the present invention with reference to the attached drawings. It should be noted that an operation monitoring system in the below-described embodiments of the present invention aims at realizing a SCADA (supervisory control and data acquisition) system.

[System Configuration]

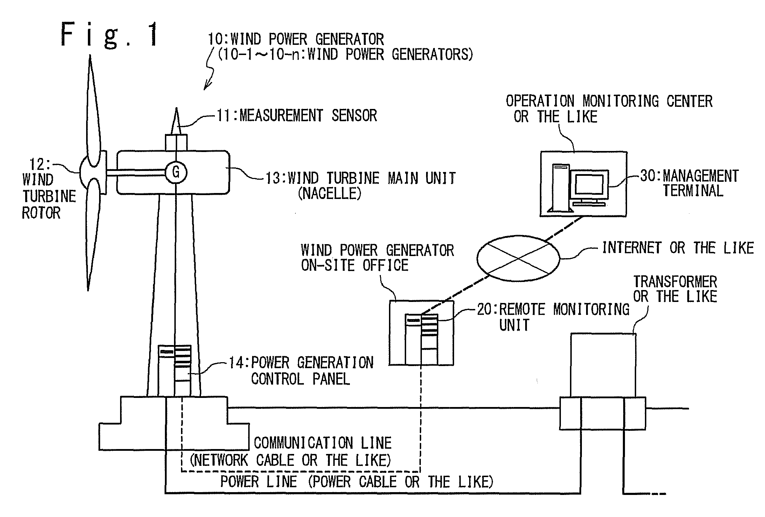

As illustrated in Fig. 1, an operation monitoring system in one embodiment of the present invention includes wind power generators 10 (10-i, where i = 1 to n, n being the number of the wind power generators), a remote monitoring unit (or a remote terminal unit (RTU)) 20, and a management terminal (or a human machine interface (HMI) 30.

The wind power generators 10 (10-i, where i = 1 to n) are disposed in a wind farm or the like and convert wind power energy into electric energy. It should be noted that the wind power generators 10 (10-i, where i = 1 to n) may be disposed in a mountain area or provided offshore, not limited to a flatland.

The remote monitoring unit 20 is disposed in a wind farm office or a wind turbine on-site office, near the wind power generators 10 (10-i, where i = 1 to n); the remote monitoring unit 20 monitors each of the wind power generators 10 (10-i, where i = 1 to n) located in the same site, which are to be monitored.

The management terminal 30 is installed in an operation monitoring center or the like located away from the wind power generators 10 (10-i, where i = 1 to n) ; the management terminal 30 communicates with the remote monitoring units 20 via the internet or the like. Specifically, the management terminal 30 monitors the operational status of each of the wind power generators 10 (10-i, where i = 1 to n) via the remote monitoring unit 20 and provides control instructions and the like. It should be noted that the management terminal 30 can communicate with a plurality of remote monitoring units 20 via the internet.

[Configuration of Wind power generator]

Each wind power generator 10 (10-i, where i = 1 to n) includes a measurement sensor(s) 11, a wind turbine rotor 12, a wind turbine main unit (nacelle) 13 and a power generation control panel 14.

One or two measurement sensors 11 are provided for each wind power generator. It should be noted that the measurement sensors 11 are each required only to measure the status of the peripheral environment of the wind power generator; the measurement sensors 11 may be each disposed near the wind power generator in an actual implementation. The measurement sensor (s) 11 measures the status of the peripheral environment of each wind power generator 10 (10-i, where i = 1 to n) and outputs the measurement result as the data related to the peripheral environment of each wind power generator 10 (10-i, where i = 1 to n). Examples of the status of the peripheral environment may include the wind conditions (the wind direction, wind speed or the like), the outside air temperature, and the like. It should be noted that an actual implementation is not limited to these examples. Also, when a trouble such as a failure occurs, the measurement sensor(s) 11 outputs data for notifying the occurrence of the trouble (a trouble notification).

The wind turbine rotor 12 is rotated by the wind power, and the rotational motion is transmitted to the wind turbine main unit (or nacelle) 13. In other words, the wind turbine rotor 12 converts the wind power into rotational energy.

The wind turbine main unit (nacelle) 13 generates electricity on the rotational motion of the wind turbine rotor 12. In other words, the wind turbine main unit (nacelle) 13 converts the rotational energy into electric energy. The wind turbine main unit (nacelle) 13 is disposed on the top of the tower of the wind power generator. In this embodiment, the wind turbine main unit (nacelle) 13 is understood as a head of the wind power generator.

The power generation control panel 14 performs a basic operation control in the wind power generator to externally output data related to the generated electric power and the peripheral environment. The power generation control panel 14 is disposed at the root of the tower of the wind power generator.

[Details of Configurations of Wind Power Generator, Remote Monitoring Unit and Management Terminal]

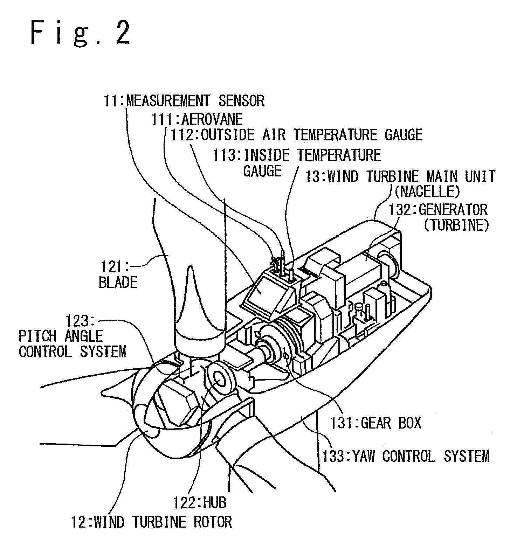

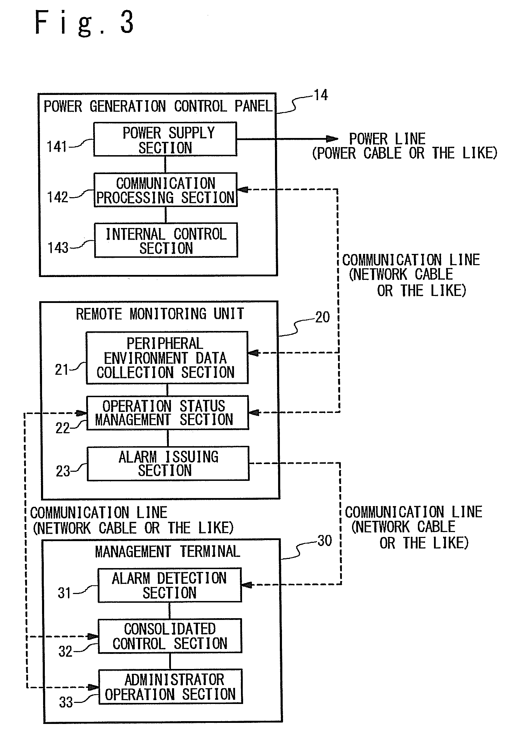

Details of the configurations of the wind power generator 10 (10-i, where i = 1 to n), the remote monitoring unit 20 and the management terminal 30 are described with reference to Figs. 2 and 3.

[Configuration of Measurement Sensor]

The measurement sensor 11 includes an aerovane 111, an outside air temperature gauge 112 and an inside temperature gauge 113.

The aerovane 111 measures the wind conditions (the wind direction, the wind speed and the like). The outside air temperature gauge 112 measures the temperature of the outside air of the wind power generator. The inside temperature gauge 113 measures the inside temperature of the wind turbine main unit (nacelle) 13.

[Configuration of Wind Turbine Rotor]

The wind turbine rotor 12 includes blades 121, a hub (rotor) 122 and a pitch angle control system 123.

The blades 121 correspond to the blades of the wind turbine rotor 12 and form a wind receiving face which receives the wind. The hub (rotor) 122 is rotated by the wind power received by the blades. Specifically, the blades 121 are pushed by the wind (the wind force or torque) and the hub (rotor) 122 is thereby rotated; the generator of the wind turbine main unit (nacelle) 13 connected to the hub (rotor) 122 is thereby rotated to generate electricity. Here, the following relation holds:

$$\text{"Output (power generation ability)} =$$

$$\text{Torque} \times \text{Rotational Velocity."}$$

When the torque balances with the electric power extracted by the generator (turbine), the generator revolves at the constant rotational velocity. The rotational velocity increases when the torque exceeds, and decreases when the torque is reduced. For example, the generator (turbine) starts generation of electric power at a wind speed of about 3 m/s (cut-in). The rated power is achieved at a wind speed of about 13 m/s. The generator is stopped for safety at or above a wind speed of 25 m/s (cut-out). The pitch angle control system 123 changes the angle of the blades 121 (that is, performs a pitch control of the blades) in response to the rotational velocity of the hub (rotor) 122, and thereby adjusts the rotation of the hub (rotor) 122 to control the output.

[Configuration of Wind Turbine Main Unit (Nacelle)]

The wind turbine main unit (nacelle) 13 includes a gear box 131, a generator (turbine) 132 and a yaw control system 133.

The gear box 131 transmits the rotation of the wind turbine rotor 12 to the generator (turbine) 132, converting the low-velocity rotation of the rotor into a high-velocity rotation. The generator (turbine) 132 generates electricity on the rotation transmitted from the gear box 131. The yaw control system 133 performs a yaw control in accordance with the wind direction by rotating the wind turbine main unit (nacelle) 13, in order to direct the hub 122 towards the wind direction.

[Configuration of Power Generation Control Panel]

The power generation control panel 14 includes a power supply section 141, a communication processing section 142 and an internal control section 143.

The power supply section 141 supplies (or transmits) electric power to a transformer or the like via a power line (power cable or the like). The communication processing section 142 communicates with the remote monitoring unit 20 via a communication line (a network cable or the like). The internal control section 143 controls internal entities of the wind power generator 10 (10-i, where i = 1 to n) (the measurement sensor 11, the wind turbine rotor 12 and the wind turbine main unit (nacelle) 13). For example, the internal control section 143 obtains data outputted from the measurement sensor 11 (various measurement results, a trouble notification and the like) and transmits the obtained data to the remote monitoring unit 20. Also, the internal control section 143 may perform a process in response to a notification, instruction or request from the remote monitoring unit 20. Also, the internal control section 143 performs the pitch control of the blades 121 of the wind turbine rotor 12 and the yaw control of the wind turbine main unit (nacelle) 13, in response to the measurement result of the aerovane 111. Also, the internal control section 143 stops the rotation of the hub (rotor) 122 of the wind turbine rotor 12 in response to the measurement results of the outside air temperature gauge 112 and the inside temperature 113.

[Configuration of Remote Monitoring Unit]

The remote monitoring unit 20 includes a peripheral environment data collection section 21, an operation status management section 22 and an alarm issuing section 23.

The peripheral environment data collection section 21 collects data related to the peripheral environment of each of the wind power generators 10 (10-i, where i = 1 to n). Specifically, the peripheral environment data collection section 21 automatically collects on-line the data related to the peripheral environment outputted as a result of the measurement of the status of the peripheral environment by the measurement sensor 11, for example.

The operation status management section 22 performs a centralized management of the operation status of each of the wind power generators 10 (10-i, where i = 1 to n). The operation status management section 22 may accumulate data related to the operation status of each of the wind power generators 10 (10-i, where i = 1 to n). Also, the operation status management section 22 may issue a certain notification, instruction or request to each of the wind power generators 10 (10-i, where i = 1 to n) in response to changes in the data related to the peripheral environment and operation status of each of the wind power generators 10 (10-i, where i = 1 to n). It should be noted that, when the alarm issuing section 23 detects a failure of the measurement sensor 11, the operation status management section 22 may automatically (or by a self-control) determine the wind power generator 10 (10-i, where i = 1 to n) in which the failure of the measurement sensor 11 occurs, and transmit to that wind power generator 10 (10-i, where i = 1 to n) data related to the peripheral environment measured by a measurement sensor 11 of a neighboring wind power generator 10 (10-i, where i = 1 to n).

The alarm issuing section 23 issues an alarm for notifying an occurrence of a trouble, when detecting a trouble of the measurement sensor 11. For example, when receiving a notification notifying a trouble from the measurement sensor 11, receiving no notification of measurement result for a predetermined continuing period of time or finding abnormal data in the data related to the peripheral environment of each of the wind power generators 10 (10-i, where i = 1 to n), the alarm issuing section 23 determines that a failure occurs in the measurement sensor 11. It is preferable that the alarm issuing section 23 is configured to, in addition to an alarm or as an alarm, output identification information (information for identifying the wind power generator of interest) of the wind power generator 10 (10-i, where i = 1 to n) for which the trouble occurs in the measurement sensor 11 and/or identification information of the measurement sensor 11 in order to allow identifying the measurement sensor 11 in which a failure occurs.

[Configuration of Management Terminal]

The management terminal 30 includes an alarm detection section 31, a consolidated control section 32 and an administrator operation section 33.

The alarm detection section 31 detects an alarm from the remote monitoring section 20 and notifies the consolidated control section 32 of the detection of the alarm. In this embodiment, when detecting an alarm from the remote monitoring unit 20, the alarm detection section 31 extracts identification information of the remote monitoring unit 20 of the alarm-issuing source, the identification information of the wind power generator 10 (10-i, where i = 1 to n) for which the failure occurs in the measurement sensor 11 and/or identification information of the measurement sensor 11 to transmit to the consolidated control section 32.

The consolidated control section 32 controls the operation of each wind power generator 10 (10-i, where i = 1 to n) via the remote monitoring unit 20. For example, the consolidated control section 32 transmits a notification, instruction or request to each wind power generator 10 (10-i, where i = 1 to n) via the remote monitoring unit 20. The consolidated control section 32 may control, via a plurality of remote monitoring units 20, all the wind power generators 10 (10-i, where i = 1 to n) monitored by the respective remote monitoring units 20. Also, the consolidated control section 32 recognizes the wind power generator 10 (10-i, where i = 1 to n) for which a trouble occurs in the measurement sensor 11, on the basis of the notification of the alarm detection from the alarm detection section 31. In this case, the consolidated control section 32 may instruct or request the remote monitoring unit 20 of the source of the alarm to transmit data related to the peripheral environment measured by a measurement sensor 11 of a neighboring wind power generator 10 (10-i, where i = 1 to n) to the wind power generator 10 (10-i, where i = 1 to n) for which the failure occurs in the measurement sensor 11. Also, the consolidated control section 32 may notify the administrator operation section 33 of the identification information of the measurement sensor 11 in which the failure occurs. When an immediate replacement or repair (maintenance) of the measurement sensor 11 is difficult, the administrator operation section 33 calculates the time when the replacement or repair of the measurement sensor 11 is made possible and notifies the administrator operation section 33 of the time. Alternatively, the administrator operation section 33 may be notified of the identification information of the measurement sensor 11 in which the failure occurs and of the fact that the measurement sensor 11 is to be replaced or repaired at that time.

The administrator operation section 33 notifies the administrator (or the operator) of various information, including data related to the operation status and the peripheral environment of each wind power generator 10 (10-i, where i = 1 to n) and the like, handles an operation by the administrator, generates or update setting information related to the control done by the consolidated control section 32 and transmits a notification, instruction or request to each wind power generator 10 (10-i, where i = 1 to n) via the remote monitoring unit 20.

<Examples of Hardware >

In the following, a description is given of specific examples of hardware of the respective components of the operation monitoring system according to the present embodiment.

An assumed example of the respective wind power generators 10 (10-i, where i = 1 to n) include a wind power generator in which a wind turbine and a wind power generator are combined as a unit. Note that a possible example of a wind power generator 10 (10-i, where i = 1 to n) which does not use a wind turbine is a generator which receives the wind on a diaphragm and obtains electric power by a piezoelectric element.

Assumed examples of the measurement sensor 11 include peripheral environment sensors such as aerovanes and outside air temperature gauges. The measurement sensor 11 may have the timer function or the GPS (global positioning system) function to obtain the time (the time slot, the date, the day of the week, the season), the latitude, longitude, orientation of the sensor and environment information such as the amount of insolation (the light intensity, the amount of light), the air pressure, the humidity, the magnitude of sound, the sound pressure, the electric field intensity (strength of electric wave), the power consumption, the existence of a neighboring shielding structure, the earthquake intensity, the earth magnetism, the electric wave, the radiation ray, the concentration in the atmosphere ($CO_x$, $NO_x$ or the like).

An assumed example of the wind turbine rotor 12 is a horizontal-axis propeller type turbine. Other examples of the wind turbine rotor 12 may include a horizontal-axis multi-blade-type wind turbine, a horizontal-axis sail wing type wind turbine, a vertical-axis Darius type wind turbine, a gyromill type wind turbine, a Savonius type wind turbine and a combination thereof, a straight-blade vertical axis wind turbine and a screw Magnus wind turbine (which uses the Magnus effect).

Assumed examples of the remote monitoring unit 20 and the management terminal 30 include computers such as PCs (personal computers), appliances, workstations, main frames, and super computers. Note that portable terminals such as cell phones, smart phones and smart books should be also understood as a sort of computers.

Although not shown, the above-described computers are realized by a processor operated on programs to perform predetermined processes, a memory storing the programs and various data and an interface used for communications over a network.

Examples of the above-described processor include: CPUs (central processing units), network processors (NPs), microprocessors, micro controllers, and dedicated semiconductor integrated circuits (IC).

Examples of the above-described memory include semiconductor memory devices such as RAMs (random access memories), ROMs (read only memories), EEPROM (electrically erasable and programmable read only memories) and flash memories, auxiliary memory units such as HDDs (hard disk drives) and SSDs (solid state drives), removable disks such as DVDs (digital versatile disks), and memory media such as SD (secure digital) memory card. Also, the above-described memory may be a buffer or a register. Alternatively, the above-described memory may be a storage device using a DAS (direct attached storage), an FC-SAN (fiber channel-storage area network), an NAS (network attached storage), an IP-SAN (IP-storage area network) or the like.

Note that the above-described processor and the above-described memory may be monolithically integrated. Recent microcomputers and the like increasingly tend to be formed as one-chip devices. Accordingly, in an assumed implementation, a one-chip microcomputer installed in an electronic device or the like may incorporate the above-described processor and the above-described memory.

Examples of the above-described interfaces include circuit boards (mother boards and I/O boards) adapted to network communications, semiconductor integrated circuits such as chips, network adapters such as NICs (network interface cards), similar expansion cards, communication devices such as antennas, and communication ports such as connectors.

Examples of the network include the internet, LANs (local area networks), wireless LANs, WANs (wide area networks), backbones, cable television (CATV) lines, fixed phone networks, public telephone networks, cell phone networks, WiMAX (IEEE 802.16a), 3G (3rd generation), lease lines, IrDA (infrared data association), Bluetooth (registered trade mark), serial communication lines and data buses.

It should be noted the respective sections (internal entities) in the remote monitor unit 20 and the management terminal 30 may be modules, components, dedicated devices or starting (calling) programs of the same. Alternatively, the respective sections (internal entities) in the remote monitor unit 20 and the management terminal 30 may be independent computers.

The remote monitoring unit 20 and the management terminal 30 are not limited to terminals or servers; the remote monitoring unit 20 and the management terminal 30 may be an intermediary device or a peripheral device. Alternatively, the remote monitoring unit 20 and the management terminal 30 may be an add-in board mounted on a computer or a virtual machine (VM) built on a physical machine. The remote monitoring unit 20 and the management terminal 30 may be mounted on a moving body such as a vehicle, a ship and an airplane.

Assumed examples of the administrator operation section 33 include a KVM (keyboard video mouse), a console, a keypad, a touch panel, a tablet, a reading device of various data transmission media, a display device such as LCD (liquid crystal display), a PDP (plasma display panel), an organic EL (electroluminescence) display, and an interface for communicating with external computers or interface devices.

It should be noted that actual implementations are not limited to these examples.

<Example>

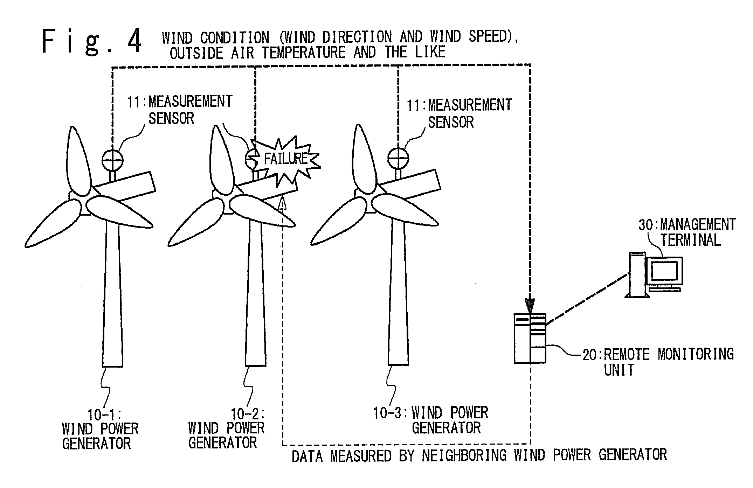

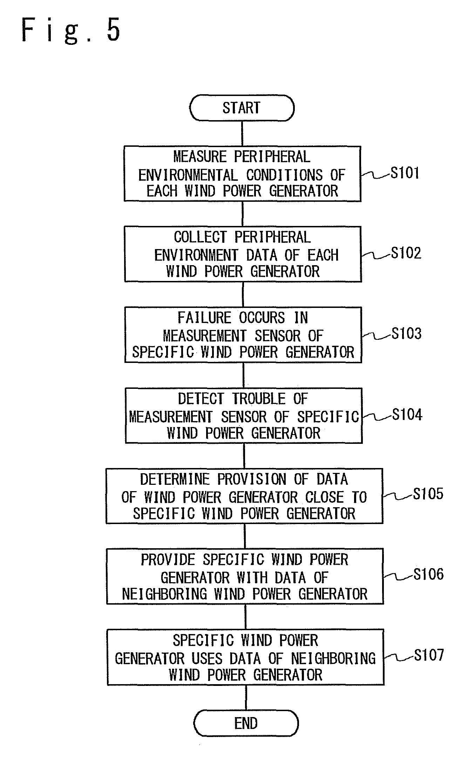

Referring to Figs. 4 and 5, a description is given of a specific example of the present invention.
In this example, as shown in Fig. 4, examples of the wind power generators 10 (10-i, where i = 1 to n) include wind power generators 10-1, 10-2 and 10-3.
The wind power generators 10-1, 10-2 and 10-3 are located in the same site. The remote monitoring unit 20 monitors the wind power generators 10-1, 10-2 and 10-3 and comprehends or recognizes on the basis of preliminary settings or the like that the wind power generators 10-1, 10-2 and 10-3 are located close to each other (in the same site).

[Procedure of Process]

Referring to Fig. 5, a description is given below of the procedure of the process in this example.

(1) Step S101

Each of the wind power generators 10-1, 10-2 and 10-3 measures the status of the peripheral environment related to the wind conditions (the wind direction, the wind speed and the like) and the outside air temperature, by using the measurement sensors 11.

(2) Step S102

The remote monitoring unit 20 collects data related to the peripheral environment obtained by the measurement sensor 11 of each of the respective wind power generators 10-1, 10-2 and 10-3. In an actual implementation, the remote monitoring unit 20 may periodically read the data related to the peripheral environments obtained by the respective measurement sensors 11 from the wind power generators 10-1, 10-2 and 10-3. Alternatively, each of the wind power generators 10-1, 10-2 and 10-3 may periodically notify or transmit the data related to the peripheral environment obtained by its own measurement sensor 11 to the remote monitoring unit 20.

(3) Step S103

Here, let us consider the case when a failure occurs in the measurement sensor 11 of the wind power generator 10-2. That is, let us consider the case when a trouble occurs in the measurement sensor 11 of the wind power generator 10-2.

(4) Step S104

The remote monitoring device 20 detects the occurrence of the trouble in the measurement sensor 11 of the wind power generator 10-2.

(5) Step S105

The remote monitoring unit 20 determines to transmit data related to the peripheral environment obtained by a measurement sensor 11 of a neighboring wind power generator of the wind power generator 10-2 (that is, the wind power generator 10-1 or 10-3), to the wind power generator 10-2. As the neighboring wind power generator, any predetermined one of other wind power generators in the same site is selected. For example, a wind power generator disposed near the wind power generator 10-2 in which the failure occurs is selected.
In this operation, the remote monitoring unit 20 may automatically determine to transmit to the wind power generator 10-2 the data related to the peripheral environment obtained by the measurement sensor 11 of the neighboring wind power generator of the wind power generator 10-2 (the wind power generator 10-1 or 10-3).
Alternatively, the remote monitoring unit 20 may notify the management terminal 30 of the occurrence of the trouble of the measurement sensor 11 of the wind power generator 10-2 and determine to transmit to the wind power generator 10-2 the data related to the peripheral environment obtained by the measurement sensor 11 of the neighboring wind power generator of the wind power generator 10-2 (the wind power generator 10-1 or 10-3), under the control from the management terminal 30.

(6) Step S106

The remote monitoring unit 20 transmits the data related to the peripheral environment obtained by the measurement sensor 11 of a different wind power generator other than the wind power generator 10-2 (the wind power generator 10-1 or 10-3) to the wind power generator 10-2. The selection of the different wind power generator is achieved as follows: For each wind power generator, a wind turbine generator around (or near) the each wind power generator is defined as the neighboring wind power generator. The remote monitoring unit 20 stores a neighboring wind power generator table indicative of an association of each wind power generator with the neighboring wind turbine generator in a storage device in advance. At step S106, the remote monitoring unit 20 extracts the associated neighboring wind power generator from the table, for the wind turbine generator 10-2 in which the trouble occurs in the measurement sensor 11. The measured values obtained by the measurement sensor 11 of the extracted neighboring wind power generator are determined as alternative data used in case of the trouble. The remote monitoring unit 20 transmits the alternative data to the wind power generator 10-2. This allows the wind power generator 10-2 to continue the operation by using the alternative data.

In an actual implementation, the remote monitoring unit 20 may calculate the average values of the data related to the peripheral environment obtained by the respective measurement sensors 11 of a plurality of wind power generators (the wind power generators 10-1 and 10-3) and transmit the average values to the wind power generator 10-2. In this case, the process of calculating the average values is performed as follows, for example: At least one neighboring wind power generator is memorized for each wind power generator in the neighboring wind power generator table. At step S106, when two or more neighboring wind power generators are memorized in the neighboring wind power generator table for the wind power generator 10-2, in which the trouble occurs in the measurement sensor 11, the remote monitoring unit 20 calculates the average values of the measured values obtained by the measurement sensors 11 of the neighboring wind power generators. The average values are determined as the data related to the peripheral environment, which are to be transmitted to the wind power generator 10-2.

(7) Step S107

The wind power generator 10-2 uses the data related to the peripheral environment transmitted from the remote monitoring unit 20 in place of the data related to the peripheral environment obtained by its own measurement sensor 11 to control the rotation of its own wind turbine rotor 12.

Let us consider the case when a trouble occurs in the outside air temperature gauge 112 (a means for obtaining data related to the outside air temperature) of the measurement sensor 11 in the wind power generator 10-2. In this case, the remote monitoring unit 20 transmits the data related to the outside air temperature of the measurement sensor 11 of at least one other wind power generator, as alternative data. The wind power generator 10-2 monitors the normality of the internal temperature of the nacelle 13, on the basis of the alternative data of the outside air temperature and data related to the inside temperature measured by the inside temperature gauge 113 of its own measurement sensor 11. When the outside air temperature (accurately, the value of the alternative data) and the inside temperature satisfy a predetermined standard, the wind power generator 10-2 can continue the operation even when a trouble occurs in the outside air temperature gauge 112 of its own measurement sensor 11.

<Advantageous Effect of Embodiments of Present Invention>

Originally, a measurement sensor can be replaced without stopping the wind power generator even when a trouble such as a failure occurs; however, since the replacement makes it impossible to measure the wind conditions (the wind direction, the wind speed and the like), the outside air temperature and the like, the operation of the wind power generator is conventionally stopped undesirably.

For example, the operation of the wind power generator is conventionally stopped when a failure occurs in the aerovane, since the wind receiving face of the wind turbine cannot be rotated in accordance with the wind direction (for an upwind type wind turbine, toward the upwind direction) due to the impossibility of the measurement of the wind direction and speed.

Also, the operation of the wind power generator is conventionally stopped when a failure occurs in the outside air temperature gauge, since the temperature abnormality which occurs in the wind turbine main unit (nacelle) cannot be monitored on the basis of the difference between the outside air temperature and the inside temperature of the wind turbine main unit (nacelle).

In some of the above-described embodiments of the present invention, on the contrary, the wind power generator can continue to operate without stopping, until a replacement or repair is completed after the failure occurs in the measurement sensor, by receiving data related to the peripheral environment of a neighboring wind power generator (located in the same site) and using the received data as the data related to its own peripheral environment.

As described above, in an operation monitoring system according to some embodiments of the present invention, the measurement sensor mounted on each of the wind power generators located in the same site measures the status of the peripheral environment of each wind power generator. The remote monitoring unit monitors the respective wind power generators and collects data related to the operation statuses and peripheral environments of the respective wind power generators. When detecting an occurrence of a trouble in the measurement sensor of a certain wind power generator of the respective wind power generators, the remote monitoring unit transmits data related to the peripheral environment measured by the measurement sensor of a different wind power generator located near the certain wind power generator, to the certain wind power generator, in which the trouble occurs in the measurement sensor. Each wind power generator continues to operate by using data related to the peripheral environment transmitted from the remote monitoring unit, even when a trouble occurs in the measurement sensor.

This allows safely operating the wind power generator without stopping the wind turbine, even when a failure occurs in the measurement sensor, such as an aerovane; this avoids the loss of power generation until the replacement or repair is completed.

<Note>

Although embodiments of the present invention are described in detail in the above, the present invention is not limited to the above-described embodiments in actual implementations; the present invention encompasses modifications which do not depart from the concept of the present invention. For example, combinations of the above-described embodiments may be also embodiments of the present invention as long as no inconsistency occurs.

The present application claims priority based on Japanese Patent Application No. 2011-143332, filed on June 28, 2011, the disclosure of which is incorporated herein by reference in its entirety.

**Claims**

1.   An operation monitoring system, comprising:

a plurality of wind power generators located in a same site, each measuring a status of a peripheral environment by a measurement sensor; and
a remote monitoring unit monitoring each of said plurality of wind power generators to collect data related to the peripheral environment of each wind power generator,
wherein, when detecting an occurrence of a trouble in the measurement sensor of at least one wind power generator out of said plurality of wind power generators, said remote monitoring unit transmits data related to the peripheral environment measured by the measurement sensor of a different wind power generator other than the wind turbine generator for which the trouble occurs in said measurement sensor out of said plurality of wind turbine generators, to the wind turbine generator for which the trouble occurs in said measurement sensor, and
wherein the wind power generator for which the trouble occurs in said measurement sensor continues to operate by using the data related to the peripheral environment which are transmitted from said remote monitoring unit.

2.   The operation monitoring system according to claim 1, wherein said measurement sensor includes means for measuring a wind direction and speed, and
wherein each of said plurality of wind power generators includes:

means for, when the trouble occurs in said measurement sensor, obtaining data related to the wind direction and speed measured by the measurement sensor of said different wind power generator from said remote monitoring unit; and
means for performing a control of a pitch angle of blades of a wind turbine rotor and a yaw control of a nacelle, based on said obtained data related to the wind direction and speed.

3.   The operation monitoring system according to claim 1 or 2, wherein said measurement sensor includes means for measuring an outside air temperature,
wherein each of said plurality of wind power generators includes:

means for, when the trouble occurs in said measurement sensor, obtaining data related to the outside air temperature measured by the measurement sensor of said different wind power generator from said remote monitoring unit; and
means for, in response to said obtained data related to the outside air temperature, based on a difference between the outside air temperature and an inside temperature of a nacelle, monitoring abnormality of the inside temperature of said nacelle to continue an operation of a wind turbine.

4. The operation monitoring system according to any one of claims 1 to 3, wherein said remote monitoring unit includes:

means for calculating an average value of data related to peripheral environments of two or more wind power generators located near the wind power generator for which the trouble occurs in said measurement sensor; and
means for transmitting data based on said calculated average value as said data related to the peripheral environment, to the wind power generator for which the trouble occurs in said measurement sensor.

5. A remote monitoring unit, comprising:

means for collecting, from a plurality of wind power generators located in a same site, data measured by a measurement sensor for measuring data related to a peripheral environment of each of the wind power generators;
means for detecting an occurrence of a trouble of a measurement sensor of at least one wind power generator out of said plurality of wind power generators; and
means for transmitting data related to the peripheral environment measured by the measurement sensor of a different wind power generator other than the wind turbine generator for which the trouble occurs in said measurement sensor out of said plurality of wind turbine generators, to the wind turbine generator for which the trouble occurs in said measurement sensor.

6. The remote monitoring unit according to claim 5, further comprising:

means for calculating an average value of data related to peripheral environments measured by measurement sensors of multiple wind power generators located near the wind power generator for which the trouble occurs in said measurement sensor; and
means for transmitting data based on said calculated average value as said data related to the peripheral environment, to the wind power generator for which the trouble occurs in said measurement sensor.

7. A wind power generator, comprising:

means for measuring a status of a peripheral environment by using a measurement sensor provided;
means for, when a trouble occurs in said measurement sensor, obtaining data related to a peripheral environment measured by a measurement sensor of a different wind power generator from a remote monitoring unit which monitors each of a plurality of wind power generators located in a same site as the wind power generator to collect data related to a peripheral environment of each of said plurality of wind power generators; and
means for continuing an operation by using the data related to the peripheral environment obtained from said remote monitoring unit.

8. The wind power generator according to claim 7, further comprising:

means for measuring a wind direction and speed by using said measurement sensor;
means for, when the trouble occurs in said measurement sensor, obtaining data related to a wind direction and speed measured by a measurement sensor of a different wind power generator located near the wind power generator from said remote monitoring unit; and
means for performing a control of a pitch angle of blades of a wind turbine rotor and a yaw control of a nacelle, based on said obtained data related to the wind direction and speed.

9. The wind power generator according to claim 7 or 8, further comprising:

means for measuring an outside air temperature by using said measurement sensor;
means for, when the trouble occurs in said measurement sensor, obtaining data related to an outside air temperature measured by a measurement sensor of a different wind power generator located near the wind power generator from said remote monitoring unit; and
means for, in response to said obtained data related to the outside air temperature, based on a difference between the outside air temperature and an inside temperature of a nacelle, monitoring abnormality of the inside temperature of said nacelle to continue an operation of a wind turbine.

10. An operation monitoring method, comprising:

a step of, by a measurement sensor mounted on each of a plurality of wind turbine generators located in a same site, measuring a status of a peripheral environment of each of said plurality of wind turbine generators;

a step of, by a remote monitoring unit, monitoring each of said plurality of wind power generators to collect data related to the peripheral environment of each of said plurality of wind power generator;

a step of, when said remote monitoring unit detects a occurrence of a trouble in the measurement sensor of at least one wind power generator out of said plurality of wind power generators, transmitting data related to the peripheral environment measured by the measurement sensor of a different wind power generator other than the wind turbine generator for which the trouble occurs in said measurement sensor out of said plurality of wind turbine generators, to the wind turbine generator for which the trouble occurs in said measurement sensor; and

a step of continuing an operate of the wind power generator for which the trouble occurs in said measurement sensor by using the data related to the peripheral environment which are transmitted from said remote monitoring unit.

11. A program for causing a remote monitoring unit to perform steps of:

collecting, from a plurality of wind power generators located in a same site, data measured by a measurement sensor for measuring data related to a peripheral environment of each of the wind power generators; and

when a occurrence of a trouble is detected in the measurement sensor of at least one wind power generator out of said plurality of wind power generators, transmitting data related to a peripheral environment measured by a measurement sensor of a different wind power generator other than the wind turbine generator for which the trouble occurs in said measurement sensor out of said plurality of wind turbine generators, to the wind turbine generator for which the trouble occurs in said measurement sensor.

Fig. 1

10:WIND POWER GENERATOR
(10-1~10-n:WIND POWER GENERATORS)

11:MEASUREMENT SENSOR

OPERATION MONITORING CENTER OR THE LIKE

12:WIND TURBINE ROTOR

13:WIND TURBINE MAIN UNIT (NACELLE)

30:MANAGEMENT TERMINAL

WIND POWER GENERATOR ON-SITE OFFICE

INTERNET OR THE LIKE

TRANSFORMER OR THE LIKE

20:REMOTE MONITORING UNIT

14:POWER GENERATION CONTROL PANEL

COMMUNICATION LINE (NETWORK CABLE OR THE LIKE)

POWER LINE (POWER CABLE OR THE LIKE)

EP 2 728 175 A1

Fig. 2

11:MEASUREMENT SENSOR
    111:AEROVANE
      112:OUTSIDE AIR TEMPERATURE GAUGE
        113:INSIDE TEMPERATURE
            GAUGE    13:WIND TURBINE MAIN UNIT
                         (NACELLE)
                    132:GENERATOR
                         (TURBINE)

121:
BLADE

123:
PITCH ANGLE
CONTROL SYSTEM

131:GEAR BOX

133:YAW CONTROL SYSTEM

122:HUB
12:WIND TURBINE ROTOR

# Fig. 3

Fig. 4

WIND CONDITION (WIND DIRECTION AND WIND SPEED),
OUTSIDE AIR TEMPERATURE AND THE LIKE

11:MEASUREMENT
SENSOR

11:MEASUREMENT
SENSOR

FAILURE

30:MANAGEMENT
TERMINAL

20:REMOTE MONITORING
UNIT

10-1:
WIND POWER
GENERATOR

10-2:
WIND POWER
GENERATOR

10-3:WIND POWER
GENERATOR

DATA MEASURED BY NEIGHBORING WIND POWER GENERATOR

# Fig. 5

```
                    ┌──────────────┐
                    │    START     │
                    └──────┬───────┘
                           │
        ┌──────────────────┴──────────────────┐
        │      MEASURE PERIPHERAL             │
        │  ENVIRONMENTAL CONDITIONS OF        │──S101
        │    EACH WIND POWER GENERATOR        │
        └──────────────────┬──────────────────┘
                           │
        ┌──────────────────┴──────────────────┐
        │      COLLECT PERIPHERAL             │
        │    ENVIRONMENT DATA OF EACH         │──S102
        │       WIND POWER GENERATOR          │
        └──────────────────┬──────────────────┘
                           │
        ┌──────────────────┴──────────────────┐
        │       FAILURE OCCURS IN             │
        │    MEASUREMENT SENSOR OF            │──S103
        │  SPECIFIC WIND POWER GENERATOR      │
        └──────────────────┬──────────────────┘
                           │
        ┌──────────────────┴──────────────────┐
        │      DETECT TROUBLE OF              │
        │ MEASUREMENT SENSOR OF SPECIFIC      │──S104
        │       WIND POWER GENERATOR          │
        └──────────────────┬──────────────────┘
                           │
        ┌──────────────────┴──────────────────┐
        │   DETERMINE PROVISION OF DATA       │
        │ OF WIND POWER GENERATOR CLOSE TO    │──S105
        │   SPECIFIC WIND POWER GENERATOR     │
        └──────────────────┬──────────────────┘
                           │
        ┌──────────────────┴──────────────────┐
        │   PROVIDE SPECIFIC WIND POWER       │
        │     GENERATOR WITH DATA OF          │──S106
        │ NEIGHBORING WIND POWER GENERATOR    │
        └──────────────────┬──────────────────┘
                           │
        ┌──────────────────┴──────────────────┐
        │      SPECIFIC WIND POWER            │
        │ GENERATOR USES DATA OF NEIGHBORING  │──S107
        │       WIND POWER GENERATOR          │
        └──────────────────┬──────────────────┘
                           │
                    ┌──────┴───────┐
                    │     END      │
                    └──────────────┘
```

<div align="center">

**INTERNATIONAL SEARCH REPORT**

</div>

| International application No. |
|---|
| PCT/JP2012/066374 |

| A. CLASSIFICATION OF SUBJECT MATTER |
|---|
| *F03D7/04(2006.01)i* |
| |
| |
| According to International Patent Classification (IPC) or to both national classification and IPC |

| B. FIELDS SEARCHED |
|---|
| Minimum documentation searched (classification system followed by classification symbols) |
| F03D7/04 |
| |
| |
| |

| Documentation searched other than minimum documentation to the extent that such documents are included in the fields searched |
|---|
| Jitsuyo Shinan Koho    1922–1996    Jitsuyo Shinan Toroku Koho    1996–2012 |
| Kokai Jitsuyo Shinan Koho    1971–2012    Toroku Jitsuyo Shinan Koho    1994–2012 |

| Electronic data base consulted during the international search (name of data base and, where practicable, search terms used) |
|---|
| |
| |

**C. DOCUMENTS CONSIDERED TO BE RELEVANT**

| Category* | Citation of document, with indication, where appropriate, of the relevant passages | Relevant to claim No. |
|---|---|---|
| Y<br><br>A | JP 2010-084545 A (Hitachi, Ltd.),<br>15 April 2010 (15.04.2010),<br>claim 1; paragraphs [0026] to [0040]; fig. 1 to 9<br>& US 2010/0078940 A1    & CN 101713376 A | 1,2,5,7,8,<br>10,11<br>3,4,6,9 |
| Y<br><br>A | JP 2007-285214 A (Nabtesco Corp.),<br>01 November 2007 (01.11.2007),<br>paragraphs [0015], [0017] to [0018]; fig. 1<br>(Family: none) | 1,2,5,7,8,<br>10,11<br>3,4,6,9 |

| ☐ Further documents are listed in the continuation of Box C. | ☐ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 20 September, 2012 (20.09.12) | 02 October, 2012 (02.10.12) |

| Name and mailing address of the ISA/<br>Japanese Patent Office | Authorized officer |
|---|---|
| | |
| Facsimile No. | Telephone No. |

Form PCT/ISA/210 (second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20020029097 A1

- JP 2011143332 A